(19) Europäisches Patentamt

European Patent Office

Office européen des brevets

(11) **EP 1 037 477 A1**

(12) **EUROPEAN PATENT APPLICATION**
published in accordance with Art. 158(3) EPC

(43) Date of publication:
20.09.2000 Bulletin 2000/38

(51) Int. Cl.7: **H04Q 7/20**, H04Q 7/32, H04B 7/26

(21) Application number: 98935288.5

(22) Date of filing: 30.07.1998

(86) International application number:
PCT/JP98/03403

(87) International publication number:
WO 00/07388 (10.02.2000 Gazette 2000/06)

(84) Designated Contracting States:
DE FR GB

(71) Applicant:
MITSUBISHI DENKI KABUSHIKI KAISHA
Tokyo 100-8310 (JP)

(72) Inventor:
MASUDA, Hiroyoshi,
Mitsubishi Denki K. K.
Tokyo 100-8310 (JP)

(74) Representative:
Sajda, Wolf E., Dipl.-Phys. et al
MEISSNER, BOLTE & PARTNER
Postfach 86 06 24
81633 München (DE)

(54) **MOBILE COMMUNICATION SYSTEM**

(57) A mobile communication system comprising a base station for informing the peripheral cell information of a cell under local service along with the current position of a mobile station under service and the vertex coordinates of the cell under local service, and a mobile station for estimating the position of the local station in the cell under service based on the current position and the vertex coordinates thus acquired, stopping to monitor the receiving levels of peripheral cells when the local station is located at the central point in a cell under local service and starting to monitor the receiving levels of peripheral cells according to the peripheral cell information thus acquired when the local station is located at a boundary point in a cell under local service. Since the mobile station can omit measuring of the receiving levels of peripheral cells at the central point in a cell under service and measuring of the receiving levels of peripheral cells located in a direction opposite to the moving direction at a boundary point, power can be saved in the mobile station and the size thereof can be reduced.

FIG. 1

**Description**

Technical Field

This invention relates to a mobile communication system for which a concept of a cell is provided and which is constructed by a base station and a mobile terminal that can perform a two-way communication.

Background Art

In a mobile communication system, in order to control a cell shift in accordance with a movement of a mobile terminal, it is an indispensable technique to measure reception levels of neighboring cells. It is necessary to measure the reception levels of the neighboring cells at a predetermined interval even during a waiting time and a connecting time of the mobile terminal and to notify (transmit) the base station of the measurement result, so that those particularly become a large factor in consumption of an electric power at the time of waiting and connecting.

In the conventional technique, since the mobile terminal does not grasp a position of the mobile terminal itself on a cell with respect to a service reception cell, the reception levels of all neighboring cells are always measured and the result is notified to the base station irrespective of a physical position of the mobile terminal on the cell.

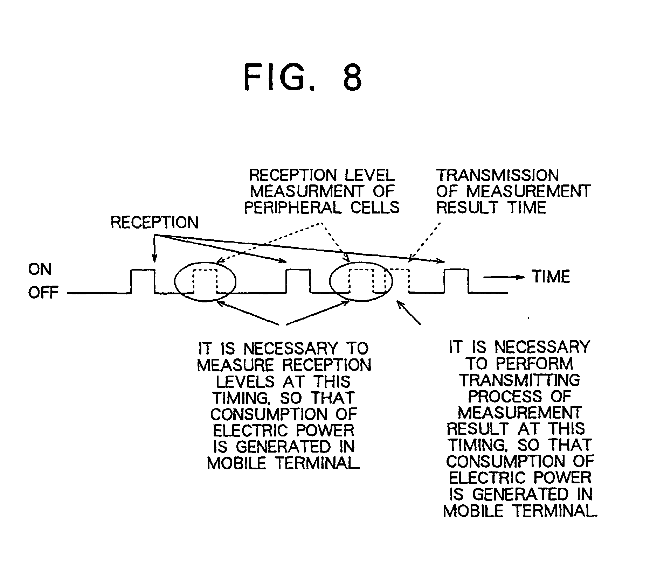

Fig. 8 is a diagram showing an ON/OFF state of an electric power source in the conventional mobile terminal. In Fig. 8, a high level shows the ON state of the electric power source and a low level shows the OFF state thereof. As shown in Fig. 8, the electric power source of the mobile terminal is turned on when a signal from the base station is received, the reception levels of the neighboring cells are measured, and the measurement result is transmitted. In addition, the power source is also turned on when speech information is transmitted (not shown).

Usually, it is necessary that the mobile terminal measures the reception levels of the neighboring cells in the case where the mobile terminal arrives at the boundary point of the service reception cell. In the case where the mobile terminal exists at the center point of the service reception cell, the reception level of the service reception cell is rightfully large, so that it is unnecessary to measure the reception levels of the neighboring cells.

In the conventional technique, since the mobile terminal does not have a method of detecting at which point (whether the center point or the boundary point) it exists in the service reception cell, the mobile terminal always measures the reception levels of the neighboring cells irrespective of the position of the mobile terminal itself on the service reception cell.

In this case, it is necessary for the mobile terminal to measure the reception levels of the neighboring cells and transmit the measurement result to the base station even at a point where it is unnecessary to measure the reception levels of the neighboring cells, for example, where the mobile terminal exists at the center point of the service reception cell or the like. It is a problem that, originally, unnecessary consumption of the electric power is caused.

This invention is accomplished to solve the above mentioned problems. It is an object to provide a mobile communication system in which consumption of unnecessary electric power can be eliminated.

Disclosure of Invention

A mobile communication system according to the invention comprises: a base station for notifying of neighboring cell information of a service cell (a cell in which a mobile terminal provides the service) and notifying of a present position of the mobile terminal and apex coordinates of the service cell; and a mobile terminal for presuming a position of the mobile terminal itself in a service reception cell on the basis of the obtained present position and the obtained apex coordinates, for stopping a monitoring of reception levels of neighboring cells in a case where the mobile terminal itself exists at a center point in the service reception cell, and for starting the monitoring of the reception levels of the neighboring cells on the basis of the neighboring cell information in a case where the mobile terminal itself exists at a boundary point in the service reception cell.

In a mobile communication system according to the invention, the mobile terminal, comprises: an antenna unit for performing a radio communication between the mobile terminal and the base station; a signal processing circuit for modulating/demodulating a signal and measuring the reception levels of the neighboring cells ; and a CPU for presuming the position of the mobile terminal itself in the service reception cell on the basis of the obtained present position and the obtained apex coordinates, for stopping the monitoring of the reception levels of the neighboring cells in the case where the mobile terminal itself exists at the center point in the service reception cell, and for starting the monitoring of the reception levels of the neighboring cells on the basis of the neighboring cell information in the case where the mobile terminal itself exists at the boundary point in the service reception cell.

In a mobile communication system according to the invention, the signal processing circuit comprises: a modem unit for demodulating a reception signal and modulating a transmission signal; and a reception level measuring circuit for measuring the reception levels of the neighboring cells.

In a mobile communication system according to the invention, the CPU comprises: a measurement candidate cell deciding module for forming a table in which monitor candidate neighboring cell numbers are described on the basis of the obtained neighboring cell information; a physical position presuming module for presuming the position of the mobile terminal itself in the service reception cell on the basis of the obtained present position and the obtained apex coordinates; and a reception level measurement start/stop judging module for stopping the monitoring of the reception levels of the neighboring cells in the case where the mobile terminal itself exists at the center point in the service reception cell and starting the monitoring of the reception levels of the neighboring cells in accordance with the formed monitor candidate neighboring cell number table in the case where the mobile terminal itself exists at the boundary point in the service reception cell.

In a mobile communication system according to the invention, the measurement candidate cell deciding module comprises: a neighboring cell information obtaining module for obtaining the neighboring cell information from the demodulated signal; and a monitor candidate neighboring cell table forming module for forming the table in which the monitor candidate neighboring cell numbers are described on the basis of the obtained neighboring cell information.

In a mobile communication system according to the invention, the physical position presuming module comprises: a mobile terminal self position coordinate obtaining module for obtaining mobile terminal self position coordinates from the demodulated signal; a cell apex coordinate obtaining module for obtaining cell apex coordinates from the demodulated signal; and an inner-cell position judging module of the mobile terminal for obtaining a length of each side of a triangle which is formed by the obtained mobile terminal self position coordinates and the two adjacent cell apex coordinates among the obtained cell apex coordinates, for obtaining a length of a vertical line from the mobile terminal self position to each side from the obtained length of each side of the triangle, and for obtaining the minimum value among the obtained lengths of the vertical lines.

In a mobile communication system according to the invention, the reception level measurement start/stop judging module comprises: a threshold value comparing module for comparing the obtained minimum value with a predetermined threshold value; a neighboring cell measurement stopping module for stopping the monitoring of the reception levels of the neighboring cells by recognizing that the mobile terminal itself exists at the center point in the service reception cell in a case where the minimum value is larger than or equal to the threshold value; and a neighboring cell measurement requesting module for recognizing that the mobile terminal itself exists at the boundary point in the service reception cell in the case where the minimum value is smaller than the threshold value and starting the monitoring of the reception levels of the neighboring cells in the moving direction by the reception level measuring circuit in accordance with the monitor candidate neighboring cell number table.

Brief Description of Drawings

Fig. 1 is a block diagram showing a construction of a mobile terminal of a mobile communication system according to a first embodiment of this invention;

Fig. 2 is a diagram showing a table in a mobile terminal of a mobile communication system according to a first embodiment of this invention;

Fig. 3 is a flowchart showing a operation of a mobile terminal of a mobile communication system according to a first embodiment of this invention;

Fig. 4 is a diagram showing a principle of a mobile terminal self position presuming process of a mobile terminal of a mobile communication system according to a first embodiment of this invention;

Fig. 5 is a diagram showing a principle in which a length of a vertical line is obtained in a mobile terminal self position presuming process of a mobile terminal of a mobile communication system according to a first embodiment of this invention;

Fig. 6 is a diagram showing a concept of a cell of a mobile communication system according to a first embodiment of this invention;

Fig. 7 is a diagram showing an ON/OFF state of an electric power source in a mobile terminal of a mobile communication system according to a first embodiment of this invention; and

Fig. 8 is a diagram showing an ON/OFF state of an electric power source in a conventional mobile terminal.

Best Mode for Carrying Out the invention

An embodiment of this invention will be described hereinbelow with reference to the drawings.

First embodiment

In a mobile terminal of the embodiment, by recognizing whether the mobile terminal itself exists at the center point or at the boundary point in a service reception cell, start/stop of the measurement of reception levels of neighboring cells is judged. At the center point, the measurement of the reception levels of the neighboring cells and a process for transmitting the measurement result to a base station are omitted, thereby suppressing consumption of an electric power. At the boundary point, the measurement of the reception levels of the neighboring cells is started. At also the boundary point, the measurement of the reception levels of the neighboring cells except for the neighboring cells in the moving direction of the mobile terminal is omitted, thereby suppressing the consumption of the electric power and also reducing measuring processes.

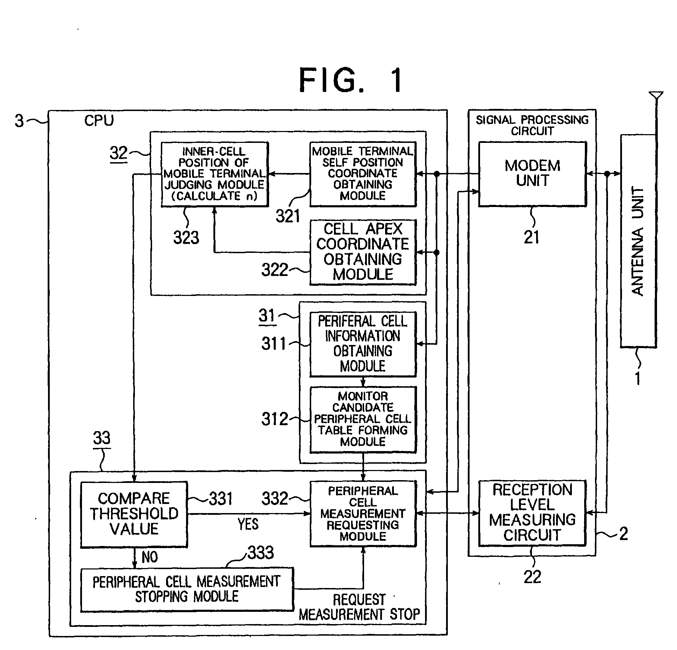

The mobile communication system according to a first embodiment of this invention will be described with reference to the drawings. Fig. 1 is a block diagram showing a construction of the mobile terminal of the mobile communication system according to the first embodiment of this invention. In each of the diagrams, the same reference numeral indicates the same or the corresponding portion.

In Fig. 1, reference numeral 1 denotes an antenna unit (AU); 2 a signal processing circuit of hardware; and 3 a CPU.

In Fig. 1, reference numeral 21 denotes a modem unit; and 22 a reception level measuring circuit.

In Fig. 1, reference numeral 31 denotes a measurement candidate cell deciding module; 32 a physical position presuming module; and 33 a reception level measurement start/stop judging module.

Further, in Fig. 1, reference numeral 311 denotes a neighboring cell information obtaining module; 312 a monitor candidate neighboring cell table forming module; 321 a mobile terminal self position coordinate obtaining module; 322 a cell apex coordinate obtaining module; 323 an inner-cell position of the mobile terminal judging module; 331 a threshold value comparing module; 332 a neighboring cell measurement requesting module; and 333 a neighboring cell measurement stopping module.

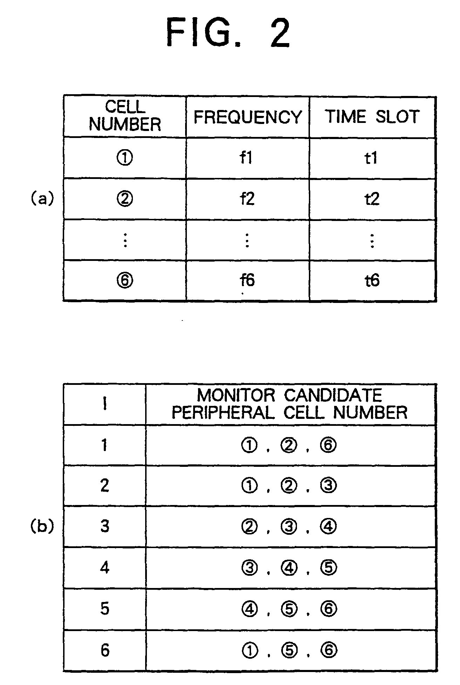

Subsequently, the operation of the mobile terminal of the mobile communication system according to the first embodiment will be described with reference to the drawings. Fig. 2 is a diagram showing a table to which the mobile terminal of the mobile communication system according to the first embodiment of this invention refers.

Information as shown in Fig. 2(a) is included in neighboring cell information in a report channel from the base station to the mobile terminal. For instance, the figure shows that with regard to a neighboring cell ①, a channel frequency is "f1" and a time slot of a TDMA system is "t1".

The mobile terminal previously forms a table as shown in Fig. 2(b) on the basis of the neighboring cell information. The mobile terminal (the neighboring cell information obtaining module 311 in the measurement candidate cell deciding module 31 and monitor candidate neighboring cell table forming module 312) forms adjacent monitor candidate neighboring cells in correspondence with each side of a hexagonal service reception cell. For instance, the table shows that in case of assuming that the mobile terminal exists at the boundary point near the neighboring cell ① in the service reception cell, monitor candidate neighboring cells are ①, ②, and ⑥. As will be described later, the mobile terminal monitors only the neighboring cells based on the table upon starting a monitoring of the neighboring cells.

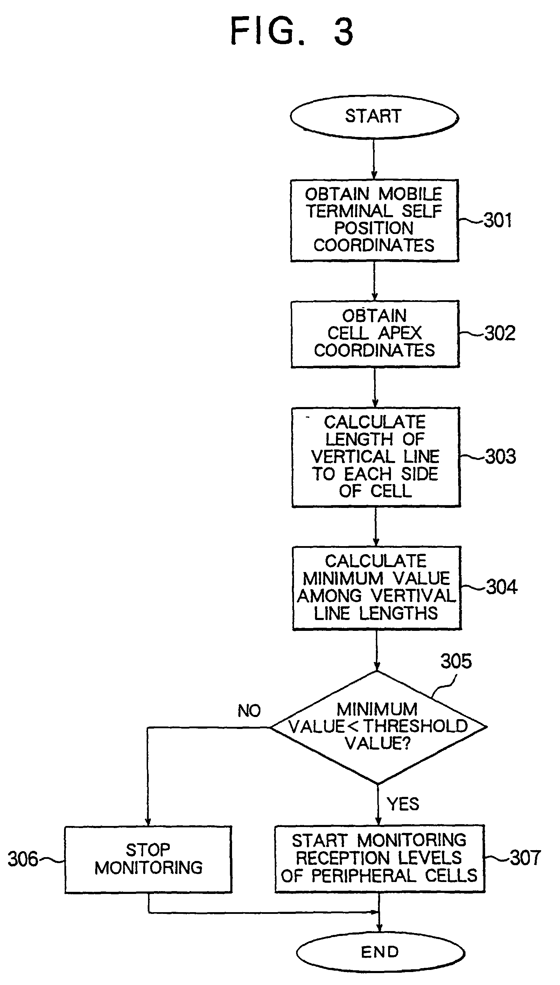

Fig. 3 is a flowchart showing the operation of the mobile terminal (the physical position presuming module 32 and reception level measurement start/stop judging module 33) of the mobile communication system according to the first embodiment of the invention.

In step 301, the mobile terminal (the mobile terminal self position coordinate obtaining module 321) obtains mobile terminal self position coordinates (X, Y) from the base station. The mobile terminal self position coordinates (X, Y) are notified from a network (base station) at the time of the mobile terminal self position registering process.

In step 302, the mobile terminal (the cell apex coordinate obtaining module 322) obtains cell apex coordinates (xi, yi) (i=1, 2, 3, 4, 5, 6) from the base station. The cell apex coordinates (xi, yi) are notified from the network (base station) by using the report channel such as a BCCH or the like.

In step 303, the mobile terminal (the inner-cell position of the mobile terminal judging module 323) calculates a length "ri" of a vertical line from the mobile terminal self position (X, Y) to each side of the hexagonal service reception cell.

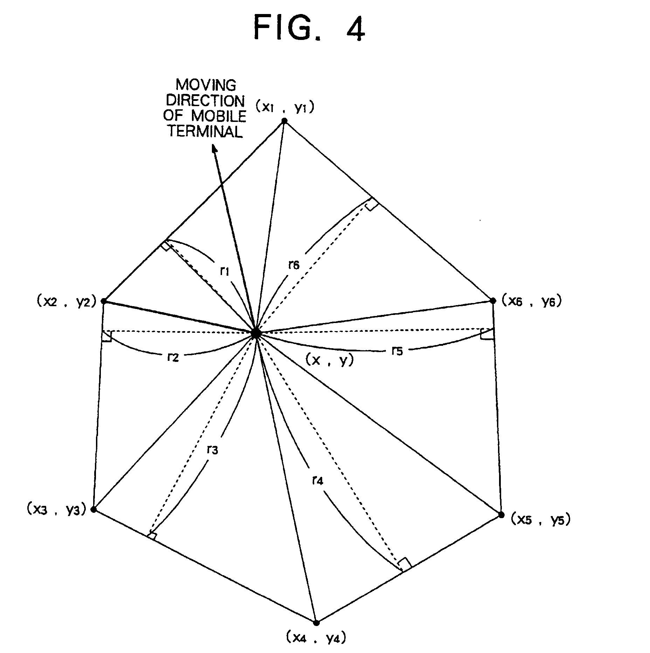

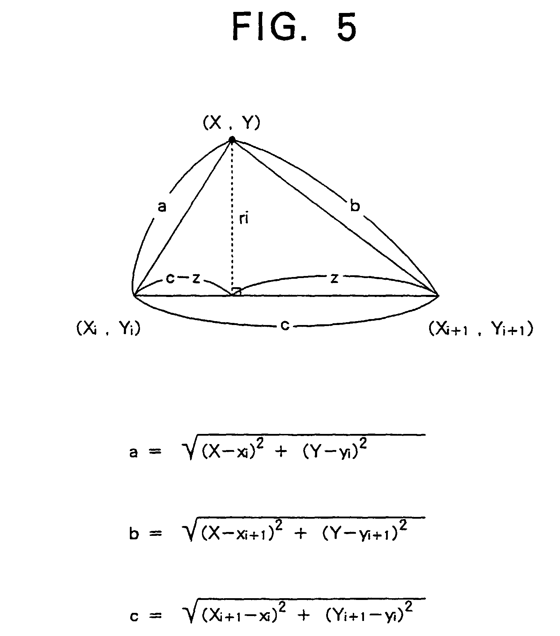

The length "ri" of the vertical line from the mobile terminal self position (X, Y) to each side can be calculated as shown in Figs. 4 and 5.

First, as shown in Fig. 5, lengths a, b, and c of each side of a triangle which is formed by the mobile terminal self position (X, Y) in the service reception cell and two adjacent points (xi, yi) and (xi+1, yi+1) among the cell apex coordinates (xi, yi) (i = 1, 2, 3, 4, 5, 6) of the service reception cell are obtained. Even if respective coordinates of (X, Y), (xi, yi), and (xi+1, yi+1) are provided by polar coordinates, those are coordinate transformed, so that the lengths a, b, and c of each side of the triangle can be obtained similarly.

$$a = \sqrt{\{(X-x_i)^2 + (Y-y_i)^2\}}$$

$$b = \sqrt{\{(X-x_{i+1})^2 + (Y-y_{i+1})^2\}}$$

$$C = \sqrt{\{(x_{i+1}-x_i)^2 + (y_{i+1}-y_i)^2\}}$$

Subsequently, "z" as shown in Fig. 5 is obtained by solving the following equations.

$$ri = \sqrt{(b^2-z^2)} = \sqrt{\{a^2 - (c - z)^2\}}$$

$$z = (b^2 + c^2 - a^2)/2c$$

The obtained "z" is substituted for the equation of $\sqrt{(b^2-z^2)} = ri$, thereby calculating the length "ri" of the vertical line drawn to each side of the hexagonal service reception cell. This is an example of obtaining the length "ri" of the vertical line to the end.

Subsequently, in step 304, the mobile terminal (the inner-cell position of the mobile terminal judging module 323) calculates the minimum value "rl" among the lengths "ri" of the six vertical lines calculated as mentioned above.

In step 305, the mobile terminal (the threshold value comparing module cell 331) compares the minimum value "rl" calculated as mentioned above with a preset threshold value "R".

The threshold value "R" is obtained, for example, on the basis of actual measurement. It is sufficient that the threshold value "R" is decided in the mobile terminal and is notified from the base station (network). Further, it can also be decided systematically and uniquely.

In step 306, the mobile terminal (the neighboring cell measurement stopping module cell 333) recognizes that the mobile terminal itself exists at the "center point" in the service reception cell in a case where the minimum value "rl" is larger than the threshold value "R" (including a case where "rl" is equal to "R"). Then the mobile terminal does not monitor the reception levels of the neighboring cells (stops the monitoring).

In step 307, the mobile terminal (the neighboring cell measurement requesting module cell 332) recognizes that the mobile terminal itself exists at the "boundary point" in the service reception cell in a case where the minimum value "rl" is smaller than the threshold value "R". Then the mobile terminal starts the monitoring of the reception levels of the neighboring cells in the moving direction by means of the reception level measuring circuit 22.

For instance, when the mobile terminal recognizes that the mobile terminal itself exists at the "boundary point" near the neighboring cell ① in the service reception cell on the basis of the minimum value "rl", the mobile terminal determines that the monitor candidate neighboring cells are ①, ② and ⑥ by the table shown in Fig. 2. That is, if the time slots of the TDMA system are "t1" ,"t2", and "t6", the channel frequencies are "f1" ,"f2", and "f6", respectively and the mobile terminal monitors each of the reception levels of the neighboring cells ①, ②, and ⑥.

After that, the mobile terminal notifies the base station of the measurement result obtained from the reception level measuring circuit 22 together with the monitor neighboring cell information through the modem unit 21 of the signal processing circuit 2 and the antenna unit 1 at a timing which will be described later.

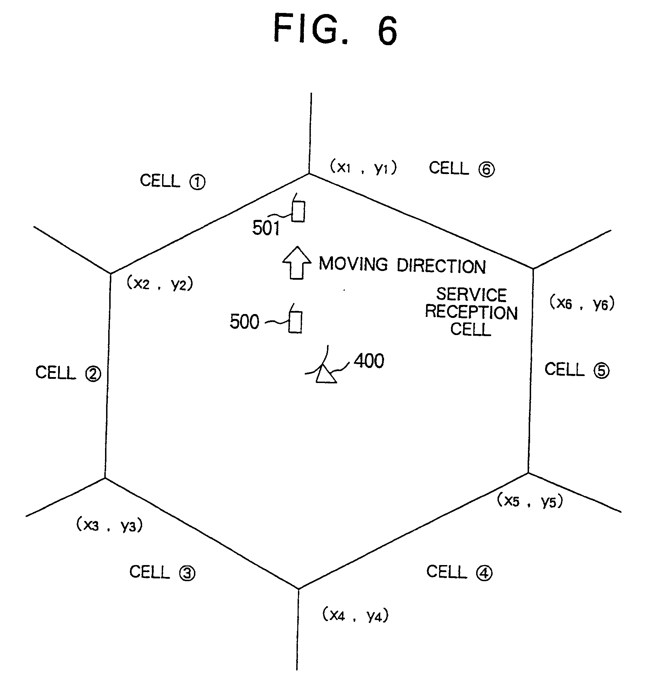

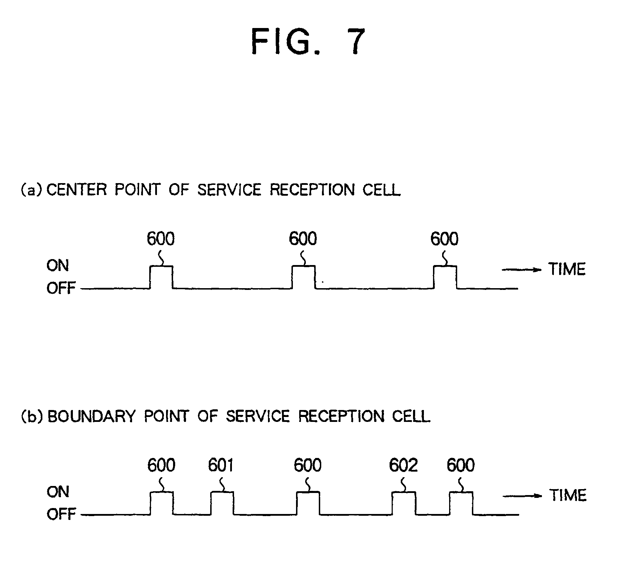

Subsequently, it will now be described how the mobile terminal operates while recognizing the position of the mobile terminal itself on the service reception cell. Fig. 6 is a diagram showing the mobile terminal according to the first embodiment moving on the service reception cell. Fig. 7 is a diagram showing an ON/OFF state of an electric power source in the mobile terminal according to the first embodiment.

In Fig. 6, reference numeral 400 denotes a base station; 500 a mobile terminal at time t; and 501 a mobile terminal at time t' which is a point of time just after a predetermined time has passed from the time t. A hexagon at the center position shows a service reception cell in which the service is received to the mobile terminals 500 and 501 from the base station 400 and a portion around the service reception cell is surrounded by the neighboring cells ① to ⑥.

In Fig. 7, (a) shows a state of an electric power source when the mobile terminal 500 exists at the center point. (b) shows a state of the electric power source when the mobile terminal 501 exists at the boundary point. In Fig. 7, a high level indicates a state in that the power source of the mobile terminals 500 and 501 are turned on. A low level indicates a state in that the power source of the mobile terminals 500 and 501 are turned off.

As shown in Fig. 7, the power source is turned on in the mobile terminals 500 and 501 at least at a transmission processing time (not shown), a reception processing time 600, a reception levels of the neighboring cells measuring time 601 and a transmission time of the measurement result 602. In times other than such times, the mobile terminals 500 and 501 perform intermittent transmission and reception to turn off the power source.

As mentioned above, the mobile terminals 500 and 501 are notified of the apex coordinates on the service reception cell by a report control signal from the base station 400 at the reception processing time 600. The mobile terminal 500 presumes the position of the mobile terminal itself on the service reception cell from the position registration information which is provided by the mobile terminal itself and the apex coordinates.

Thus, the mobile terminals 500 and 501 judge whether they exist at the center point of the cell or at the boundary point of the cell on the service reception cell. If they exist at the center point, as illustrated in Fig. 7, the reception level measuring process of the neighboring cells is not executed.

As shown in Fig. 6, when the mobile terminal 501 moves in the boundary direction of the service reception cell and reaches the boundary point, the mobile terminal 501 starts the reception level measuring process of the neighboring cells at the reception level measuring time 601. At this time, only the neighboring cells ①, ②, and ⑥ located in the moving direction are selected among the neighboring cells ① to ⑥ notified by the base station 400 at the reception processing time 600, the reception level measurement thereof is executed, and the reception level measurement with respect to the other neighboring cells ③, ④ and ⑤ is not executed. When the mobile terminal 501 has moved, for example, to the apex coordinates (x1, y1), only the neighboring cells ① and ⑥ are selected and the reception level measurement is executed.

In the mobile communication system according to the first embodiment of the invention, the mobile terminal can presume the position of the mobile terminal itself on the cell in the service reception cell by the apex coordinates of the service reception cell notified from the base station and the position registration information of the mobile terminal itself. Therefore, for example, at the position where a reception level is high when the mobile terminal itself exists at the center point of the cell or the like, not only the measurement of the reception levels of the neighboring cells can be omitted but also the transmission of the measurement result to the base station can be omitted.

When the mobile terminal itself is moved to the boundary point of the service reception cell, the mobile terminal can recognize the boundary point of the cell from the apex coordinates of the service reception cell notified from the base station and the position registration information of the mobile terminal itself. By that, the mobile terminal starts to measure the reception levels of the neighboring cells. The measurement of the neighboring cells at that time is limited only to the measurement of the reception levels of the cells located in the moving direction of the mobile terminal itself.

Consequently, at the position where the reception level is high such as the center point of the service reception cell, not only the measurement of the reception levels of the neighboring cells, which is originally unnecessary, can be omitted but also the unnecessary burst transmission when the measurement result is notified to the base station can be omitted. In addition, the position of the mobile terminal itself on the cell and the frequency arrangement of the neighboring cells are recognized, so that at the cell boundary point, the measurement of the reception levels of the neighboring cells located in the direction opposite to the moving direction of the mobile terminal can be omitted. Therefore, the effect in realizing the saving of the electric power can be obtained.

Industrial Applicability

As described above, a mobile communication system according to this invention comprises: a base station for notifying of neighboring cell information of a service cell and notifying of a present position of a mobile terminal and apex coordinates of the service cell; and a mobile terminal for presuming a position of the mobile terminal itself in a service reception cell on the basis of the obtained present position and the obtained apex candidates, for stopping the monitoring of reception levels of neighboring cells in a case where the mobile terminal itself exists at the center point in the service reception cell, and for starting the monitoring of the reception levels of the neighboring cells on the basis of the obtained neighboring cell information in a case where the mobile terminal itself exists at the boundary point in the service reception cell. Therefore, in the mobile terminal, reception level measurement of the neighboring cells at the center point of the service reception cell can be omitted. Also, at the boundary point, reception level measurement of the neighboring cells located in the direction opposite to the moving direction can be omitted. Thus, effect in realizing the saving of an electric power can be obtained, which leads to an effect in downsizing.

As described above, in a mobile communication system according to the invention, the mobile terminal comprises: an antenna unit for performing a radio communication between the mobile terminal and the base station; a signal processing circuit for modulating/demodulating a signal and measuring the reception levels of the neighboring cells; and a CPU for presuming the position of the mobile terminal itself in the service reception cell on the basis of the obtained present position and the obtained apex coordinates, for stopping the monitoring of the reception levels of the neighboring cells in the case where the mobile terminal itself exists at the center point in the service reception cell, and for starting the monitoring of the reception levels of the neighboring cells on the basis of the obtained neighboring cell information in the case where the mobile terminal itself exists at the boundary point in the service reception cell. Therefore, in the mobile terminal, the reception level measurement of the neighboring cells at the center point of the service reception cell can be omitted. Also, at the boundary point, the reception level measurement of the neighboring cells located in the direction opposite to the moving direction can be omitted. Thus, effect in realizing the saving of an electric power can be obtained, which leads to an effect in downsizing.

As described above, in a mobile communication system according to the invention, the signal processing circuit comprises: a modem unit for demodulating a reception signal and modulating a transmission signal; and a reception level measuring circuit for measuring the reception levels of the neighboring cells. Therefore, in the mobile terminal, the reception level measurement of the neighboring cells at the center point of the service reception cell can be omitted. Also, at the boundary point, the reception level measurement of the neighboring cells located in the direction opposite to the moving direction can be omitted. Thus, effect in realizing the saving of an electric power can be obtained, which leads to an effect in downsizing.

As described above, in a mobile communication system according to the invention, the CPU comprises; a measurement candidate cell deciding module for forming a table in which monitor candidate cell numbers are described on the basis of the obtained neighboring cell information; a physical position presuming module for presuming the position of the mobile terminal itself in the service reception cell on the basis of the obtained present position and the obtained apex coordinates; and a reception level measurement start/stop judging module for stopping the monitoring of the reception levels of the neighboring cells in the case where the mobile terminal itself exists at the center point in the service reception cell and starting the monitoring of the reception levels of the neighboring cells in accordance with the formed monitor candidate neighboring cell number table in the case where the mobile terminal itself exists at the boundary point in the service reception cell. Therefore, in the mobile terminal, the reception level measurement of the neighboring cells at the center point of the service reception cell can be omitted. Also, at the boundary point, the reception level measurement of the neighboring cells located in the direction opposite to the moving direction can be omitted. Thus, effect in realizing the saving of an electric power can be obtained, which leads to an effect in downsizing.

As described above, in a mobile communication system according to the invention, the measurement candidate cell deciding module comprises: a neighboring cell information obtaining module for obtaining the neighboring cell information from the demodulated signal; and a monitor candidate neighboring cell table forming module for forming the table in which the monitor candidate neighboring cell numbers are described on the basis of the obtained neighboring cell information. Therefore, in the mobile terminal, the reception level measurement of the neighboring cells at the center point of the service reception cell can be omitted. Also, at the boundary point, the reception level measurement of the neighboring cells located in the direction opposite to the moving direction can be omitted. Thus, effect in realizing the saving of an electric power can be obtained, which leads to an effect in downsizing.

As described above, in a mobile communication system according to the invention, the physical position presuming module comprises: an mobile terminal self position coordinate obtaining module for obtaining mobile terminal self position coordinates from the demodalated signal; a cell apex coordinate obtaining module for obtaining cell apex coordinates from the demodulated signal; and an inner-cell position judging module of the mobile terminal for obtaining a length of each side of a triangle which is formed by the obtained mobile terminal self position coordinates and two adjacent cell apex coordinates among the obtained cell apex coordinates, for obtaining a length of a vertical line from the inner-office position to each side from the obtained length of each side of the triangle, and for obtaining a minimum value among the obtained lengths of the vertical lines. Therefore, in the mobile terminal, the reception level measurement of the neighboring cells at the center point of the service reception cell can be omitted. Also, at the boundary point, the reception level measurement of the neighboring cells located in the direction opposite to the moving direction can be omitted. Thus, effect in realizing the saving of an electric power can be obtained, which leads to an effect in downsizing.

As described above, in a mobile communication system according to the invention, the reception level measurement start/stop judging module comprises: a threshold value comparing module for comparing the obtained the minimum value with a predetermined threshold value; a neighboring cell measurement stopping module for stopping the monitoring of the reception levels of the neighboring cells by recognizing that the mobile terminal itself exists at the center point in the service reception cell in a case where the minimum value is larger than or equal to the threshold value; and a neighboring cell measurement requesting module for recognizing that the mobile terminal itself exists at the boundary point in the service reception cell in a case where the minimum value is smaller than the threshold value and starting the monitoring of the reception levels of the neighboring cells in the moving direction by the reception level measuring circuit in accordance with the monitor candidate neighboring cell number table. Therefore, in the mobile terminal, the reception level measurement of the neighboring cells at the center point of the service reception cell can be omitted. Also, at the boundary point, the reception level measurement of the neighboring cells located in the direction opposite to the moving direction can be omitted. Thus, effect in realizing the saving of an electric power can be obtained, which leads to an effect in downsizing.

**Claims**

1.    A mobile communication system comprising:

a base station for notifying of neighboring cell information of a service cell and notifying of a present position of a mobile terminal and apex coordinates of said service cell; and
a mobile terminal for presuming a position of the mobile terminal itself in a service reception cell on the basis of said obtained present position and said obtained apex coordinates, for stopping a monitoring of reception levels of neighboring cells in a case where the mobile terminal itself exists at a center point in said service reception cell, and for starting the monitoring of the reception levels of the neighboring cells on the basis of said obtained neighboring cell information in a case where the mobile terminal itself exists at a boundary point in the service reception cell.

2.    A mobile communication system according to claim 1,
wherein said mobile terminal comprises:

an antenna unit for performing a radio communication between said mobile terminal and said base station;
a signal processing circuit for modulating/demodulating a signal and measuring the reception levels of the neighboring cells; and
a CPU for presuming the position of the mobile terminal itself in the service reception cell on the basis of said obtained present position and said obtained apex coordinates, for stopping the monitoring of the reception levels of the neighboring cells in the case where the mobile terminal itself exists at the center point in the service reception cell, and for starting the monitoring of the reception levels of the neighboring cells on the basis of said obtained neighboring cell information in the case where the mobile terminal itself exists at the boundary point in the service reception cell.

3. A mobile communication system according to claim 2,
wherein said signal processing circuit comprises:

a modem unit for demodulating a reception signal and modulating a transmission signal; and
a reception level measuring circuit for measuring the reception levels of the neighboring cells.

4. A mobile communication system according to claim 3,
wherein said CPU comprises:

a measurement candidate cell deciding module for forming a table in which monitor candidate neighboring cell numbers are described on the basis of said obtained neighboring cell information;
a physical position presuming module for presuming the position of the mobile terminal itself in the service reception cell on the basis of said obtained present position and said obtained apex coordinates; and
a reception level measurement start/stop judging module for stopping the monitoring of the reception levels of the neighboring cells in the case where the mobile terminal itself exists at the center point in the service reception cell and starting the monitoring of the reception levels of the neighboring cells in accordance with said formed monitor candidate neighboring cell number table in the case where the mobile terminal itself exists at the boundary point in the service reception cell.

5. A mobile communication system according to claim 4, wherein said measurement candidate cell deciding module comprises:

a neighboring cell information obtaining module for obtaining said neighboring cell information from said demodulated signal; and
a monitor candidate neighboring cell table forming module for forming a table in which the monitor candidate neighboring cell numbers are described on the basis of said obtained neighboring cell information.

6. A mobile communication system according to claim 5, wherein said physical position presuming module comprises:

a mobile terminal self position coordinate obtaining module for obtaining mobile terminal self position coordinates from said demodulated signal;
a cell apex coordinate obtaining module for obtaining cell apex coordinates from said demodulated signal; and an inner-cell position judging module of the mobile terminal for obtaining a length of each side of a triangle which is formed by said obtained mobile terminal self position coordinates and two adjacent cell apex coordinates among said obtained cell apex coordinates, for obtaining a length of a vertical line from the mobile terminal self position to each side from said obtained length of each side of said triangle, and for obtaining a minimum value among the obtained lengths of the vertical lines.

7. A mobile communication system according to claim 6, wherein said reception level measurement start/stop judging module comprises:

a threshold value comparing module for comparing said obtained minimum value with a predetermined threshold value;
a neighboring cell measurement stopping module for stopping the monitoring of the reception levels of the neighboring cells by recognizing that the mobile terminal itself exists at the center point in the service reception cell in a case where said minimum value is larger than or equal to said threshold value; and
a neighboring cell measurement requesting module for recognizing that the mobile terminal itself exists at the boundary point in the service reception cell in a case where said minimum value is smaller than said threshold value and starting the monitoring of the reception levels of the neighboring cells in the moving direction by said reception level measuring circuit in accordance with said monitor candidate neighboring cell number table.

# FIG. 1

CPU (3)

**Module 32:**
- INNER-CELL POSITION OF MOBILE TERMINAL JUDGING MODULE (CALCULATE n) — 323
- MOBILE TERMINAL SELF POSITION COORDINATE OBTAINING MODULE — 321
- CELL APEX COORDINATE OBTAINING MODULE — 322

**Module 31:**
- PERIFERAL CELL INFORMATION OBTAINING MODULE — 311
- MONITOR CANDIDATE PERIPHERAL CELL TABLE FORMING MODULE — 312

**Module 33:**
- COMPARE THRESHOLD VALUE — 331
- PERIPHERAL CELL MEASUREMENT REQUESTING MODULE — 332
- PERIPHERAL CELL MEASUREMENT STOPPING MODULE — 333
- YES
- NO
- REQUEST MEASUREMENT STOP

**SIGNAL PROCESSING CIRCUIT:**
- MODEM UNIT — 21
- RECEPTION LEVEL MEASURING CIRCUIT — 22

ANTENNA UNIT — 1

2

EP 1 037 477 A1

# FIG. 2

(a)

| CELL NUMBER | FREQUENCY | TIME SLOT |
|---|---|---|
| ① | f1 | t1 |
| ② | f2 | t2 |
| ⋮ | ⋮ | ⋮ |
| ⑥ | f6 | t6 |

(b)

| I | MONITOR CANDIDATE PERIPHERAL CELL NUMBER |
|---|---|
| 1 | ① , ② , ⑥ |
| 2 | ① , ② , ③ |
| 3 | ② , ③ , ④ |
| 4 | ③ , ④ , ⑤ |
| 5 | ④ , ⑤ , ⑥ |
| 6 | ① , ⑤ , ⑥ |

# FIG. 3

```
          ┌─────────────┐
          │    START    │
          └──────┬──────┘
                 │
                 ▼
     ┌──────────────────────┐
     │   OBTAIN MOBILE      │
     │   TERMINAL SELF      │──301
     │     POSITION         │
     │   COORDINATES        │
     └──────────┬───────────┘
                │
                ▼
     ┌──────────────────────┐
     │      OBTAIN          │
     │    CELL APEX         │──302
     │   COORDINATES        │
     └──────────┬───────────┘
                │
                ▼
     ┌──────────────────────┐
     │    CALCULATE         │
     │    LENGTH OF         │
     │  VERTICAL LINE       │──303
     │  TO EACH SIDE        │
     │    OF CELL           │
     └──────────┬───────────┘
                │
                ▼
     ┌──────────────────────┐
     │    CALCULATE         │
     │  MINIMUM VALUE       │
     │ AMONG VERTIVAL       │──304
     │  LINE LENGTHS        │
     └──────────┬───────────┘
                │
                ▼
                          305
            ╱─────────────╲
           ╱   MINIMUM     ╲
     NO   ╱ VALUE<THRESHOLD ╲
    ◄─────   VALUE?          
           ╲               ╱
            ╲─────────────╱
                │  YES
    ┌──────────┐│
    │  STOP    ││
306─│MONITORING││
    └────┬─────┘▼
     ┌──────────────────────┐
     │ START MONITORING     │
     │ RECEPTION LEVELS     │──307
     │ OF PERIPHERAL CELLS  │
     └──────────┬───────────┘
                │
                ▼
          ┌─────────────┐
          │     END     │
          └─────────────┘
```

# FIG. 4

MOVING
DIRECTION
OF MOBILE
TERMINAL

$(x_1 , y_1)$

$(x_2 , y_2)$

$(x_6 , y_6)$

$r_1$

$r_6$

$r_2$

$r_5$

$(x , y)$

$r_3$

$r_4$

$(x_3 , y_3)$

$(x_5 , y_5)$

$(x_4 , y_4)$

# FIG. 5

$$a = \sqrt{(X-x_i)^2 + (Y-y_i)^2}$$

$$b = \sqrt{(X-x_{i+1})^2 + (Y-y_{i+1})^2}$$

$$c = \sqrt{(X_{i+1}-x_i)^2 + (Y_{i+1}-y_i)^2}$$

# FIG. 6

CELL ①

$(x_1 , y_1)$    CELL ⑥

501

⇧ MOVING DIRECTION

$(x_2 , y_2)$

SERVICE
RECEPTION
CELL

$(x_6 , y_6)$

500

CELL ②

400

CELL ⑤

$(x_5 , y_5)$

$(x_3 , y_3)$

CELL ③

CELL ④

$(x_4 , y_4)$

# FIG. 7

(a) CENTER POINT OF SERVICE RECEPTION CELL

(b) BOUNDARY POINT OF SERVICE RECEPTION CELL

# FIG. 8

RECEPTION LEVEL
MEASURMENT OF
PERIPHERAL CELLS

TRANSMISSION
OF MEASUREMENT
RESULT TIME

RECEPTION

ON

OFF

TIME

IT IS NECESSARY TO
MEASURE RECEPTION
LEVELS AT THIS
TIMING, SO THAT
CONSUMPTION OF
ELECTRIC POWER
IS GENERATED IN
MOBILE TERMINAL

IT IS NECESSARY
TO PERFORM
TRANSMITTING
PROCESS OF
MEASUREMENT
RESULT AT THIS
TIMING, SO THAT
CONSUMPTION OF
ELECTRIC POWER
IS GENERATED IN
MOBILE TERMINAL

16

# INTERNATIONAL SEARCH REPORT

| International application No. |
| --- |
| PCT/JP98/03403 |

**A. CLASSIFICATION OF SUBJECT MATTER**
Int.Cl⁶ H04Q7/20, 7/32, H04B7/26

According to International Patent Classification (IPC) or to both national classification and IPC

**B. FIELDS SEARCHED**

Minimum documentation searched (classification system followed by classification symbols)
Int.Cl⁶ H04Q7/20, 7/32, H04B7/26

Documentation searched other than minimum documentation to the extent that such documents are included in the fields searched
Jitsuyo Shinan Koho          1926-1997    Jitsuyo Shinan Toroku Koho    1996-1998
Kokai Jitsuyo Shinan Koho    1971-1997

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, A, 10-117373  (K.K. YRP Ido Tsushin Kiban Gijutsu Kenkyusho), 6 May, 1998 (06. 05. 98), Column 8, lines 8 to 18  (Family: none) | 1, 2, 3 |
| A | JP, A, 9-247735  (Matsushita Electric Industrial Co., Ltd.), 19 September, 1997 (19. 09. 97), Column 1, lines 37 to 40  (Family: none) | 1 |

☐ Further documents are listed in the continuation of Box C.    ☐ See patent family annex.

| * Special categories of cited documents: | "T" later document published after the international filing date or priority |
| --- | --- |
| "A" document defining the general state of the art which is not considered to be of particular relevance | date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 22 October, 1998 (22. 10. 98) | 4 November, 1998 (04. 11. 98) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

17